# FASCICULE DE BREVET EUROPEEN

(11) **EP 1 487 075 B1**
(45) Date de publication et mention de la délivrance du brevet: **17.04.2013**
(21) Numéro de dépôt: 04012660.9
(22) Date de dépôt: 28.05.2004
(51) Int. Cl.: H02H 3/04

(54) **Procédé et dispositif de commande d'un volet motorisé**
Verfahren sowie Vorrichtung zur Steuerung eines motorisierten Rolladen
Method and device for controlling a motorised roller shutter

(30) Priorité: 10.06.2003 FR 0306932
(43) Date de publication de la demande: 15.12.2004
(73) Titulaire: Somfy SAS, 74300 Cluses (FR)
(72) Inventeur: Felisaz, Frédéric, 74930 Reignier (FR)
(74) Mandataire: Bugnion Genève

(56) Documents cités:
- EP-A- 0 672 912
- US-A- 4 452 292

## Description

L'invention concerne un procédé de commande d'un dispositif de fermeture, d'occultation ou de protection solaire comprenant un moteur d'entraînement alimenté à travers un disjoncteur thermique, un récepteur d'ordres pilotant le moteur et un émetteur d'ordres autonome et susceptible de communiquer à distance avec le récepteur d'ordres et comportant des moyens de commande d'émission d'ordres de mouvement. Elle concerne de plus un dispositif permettant de mettre en oeuvre un tel procédé.

Ces dispositifs, notamment les volets roulants, les stores, les écrans et les rideaux sont entraînés par des moteurs par exemple de type tubulaire à usage intermittent. Ces moteurs sont munis d'un disjoncteur thermique également appelé « capsule thermique ». Il s'agit généralement d'un simple dispositif à bilame, de petites dimensions, qui est inséré dans le bobinage du moteur ou à proximité immédiate de celui-ci. La présence d'un tel composant est imposée par des normes et règlements. Cette présence se justifie par les conditions quasi-adiabatiques de fonctionnement du moteur dans son environnement.

En effet, si on prend l'exemple d'un actionneur tubulaire de volet roulant comprenant un moteur, on trouve autour de celui-ci les enveloppes suivantes :
- le tube de l'actionneur réalisé par exemple en matière plastique,
- le tube d'enroulement du volet, entraîné en rotation par l'actionneur,
- une ou plusieurs couches d'enroulement du volet roulant, selon l'état d'enroulement,
l'ensemble étant enfermé dans un caisson.

Les échanges thermiques entre le moteur et l'extérieur sont très limités, par rapport à un moteur prévu pour un fonctionnement permanent et comprenant une roue de ventilation forcée.

Compte tenu de ces conditions de fonctionnement, l'échauffement des bobinages du moteur par effet Joule conduirait à des températures dangereuses, susceptibles de provoquer un incendie si la réglementation ne prévoyait pas la présence de disjoncteurs thermiques.

Grâce à la présence de ce disjoncteur, l'alimentation du moteur est coupée automatiquement et de manière simple dès que la température dépasse une température fixée très en deçà de la température critique risquant de provoquer un incendie.

La présence d'une telle sécurité thermique passe en général totalement inaperçue pour l'utilisateur. En effet, la durée d'une manoeuvre normale d'un équipement motorisé tel qu'un store ou un volet roulant est de l'ordre de 20 à 30 secondes pour aller d'une position complètement enroulée à une position complètement déroulée alors que, partant d'un équilibre thermique avec la température ambiante (25°C), la température de coupure de l'alimentation du moteur n'est atteinte qu'au bout de 5 à 7 minutes de fonctionnement.

Entre deux manoeuvres normales, le moteur a largement le temps de se refroidir au travers des ponts thermiques de l'installation même si ceux-ci sont de mauvais conducteurs thermiques.

La situation devient différente si des enfants prennent plaisir à jouer avec l'installation ou si un nouvel utilisateur souhaite en faire une démonstration auprès de ses voisins, lesquels en saisissent tour à tour les commandes.

Suite aux manoeuvres répétées, le moteur, ayant atteint la température de coupure de l'alimentation, cesse soudain de fonctionner, laissant supposer une panne soudaine de l'installation. Les modes d'emploi ou documents techniques étant introuvables au moment où l'on souhaiterait les consulter, un doute sur la fiabilité du produit s'installe chez l'utilisateur. Cette panne apparente conduit de plus à des appels inconsidérés au service après-vente du fabricant ou de l'installateur. Ces situations engendrent une insatisfaction de l'utilisateur.

Avant de faire appel au service après-vente, l'utilisateur aura sans aucun doute tenté à plusieurs reprises commander le dispositif par des appuis successifs sur les touches de commande de l'émetteur d'ordres, provoquant ainsi l'émission de commandes qui ne peuvent être satisfaites. Ces émissions multiples ont deux effets négatifs. Premièrement, elles conduisent à une consommation inutile d'énergie stockée dans l'accumulateur de l'émetteur d'ordres, réduisant son autonomie et entraînant par la suite une nouvelle insatisfaction. Dans le cas où l'émetteur d'ordres ne fonctionne pas avec une pile mais avec un élément rechargeable par capteur photovoltaïque, on peut même atteindre la décharge complète du dispositif de stockage d'énergie, au cours de ces manipulations multiples. Ainsi donc, l'émetteur d'ordres n'est plus opérationnel au moment où, suffisamment refroidi, le moteur le redevient. Deuxièmement, elles conduisent éventuellement à saturer le réseau de communication. D'autres éléments pourtant fonctionnels n'obéissent plus alors, au moins temporairement, à leurs propres émetteurs d'ordres.

De la même façon, il arrive que l'installateur lui-même procède à de très nombreuses manoeuvres de réglage de l'installation, s'il est encore novice en la matière. Quand le moteur cesse soudain de fonctionner, l'installateur en saisit immédiatement la cause et ne réagit pas comme l'utilisateur à cet événement. Cependant, il serait utile qu'il soit averti dès que le dispositif redevient fonctionnel, sans pour autant devoir rester au voisinage de l'émetteur d'ordres et de réessayer périodiquement de commander le dispositif.

De la demande de brevet EP 0 672 912, on connaît un dispositif permettant d'indiquer l'état de disponibilité d'un moteur. Ce dispositif permet d'afficher en permanence, pourvu que la tension du secteur soit présente, l'état de 5 variables logiques, dont une représente l'état d'un interrupteur thermique. Un tel dispositif risque de rendre perplexe un utilisateur de ce type de produits. Il n'attire pas l'attention sur la variable permettant de déterminer que le dispositif fonctionne de manière anormale suite à l'ouverture du contact thermique. De plus, cette information ne peut être présentée au niveau d'un émetteur d'ordres à distance autonome.

Le but de l'invention est de fournir un procédé palliant aux inconvénients cités et améliorant les procédés connus de l'art antérieur. En particulier, l'invention se propose de fournir un procédé simple permettant d'informer l'utilisateur sur l'état du disjoncteur thermique au niveau de l'émetteur et d'éviter la décharge de l'accumulateur de l'émetteur pendant les périodes d'indisponibilité du moteur. L'invention concerne également un dispositif permettant de mettre en oeuvre un tel procédé.

Le procédé selon l'invention est caractérisé par la partie caractérisante de la revendication 1.

Différents modes d'exécution du procédé de commande selon l'invention sont définis par les revendications dépendantes 2 à 9.

Le dispositif de fermeture, d'occultation ou de protection solaire pour la mise en oeuvre du procédé comprend un moteur d'entraînement alimenté à travers un disjoncteur thermique, un récepteur d'ordres pilotant le moteur et un émetteur d'ordres autonome et susceptible de communiquer à distance avec le récepteur d'ordres. Le dispositif est caractérisé en ce que l'émetteur d'ordres comprend des moyens d'émission temporisée de signaux sensoriels d'information sur l'état du disjoncteur thermique.

Différents modes de réalisation du dispositif de fermeture selon l'invention sont définis par les revendications dépendantes 11 et 12.

Le dessin annexé représente à titre d'exemples un mode réalisation d'un dispositif selon l'invention et deux modes d'exécution du procédé de commande selon l'invention.
La figure 1 est une vue d'un mode de réalisation du dispositif selon l'invention.
La figure 2 est un diagramme d'un premier mode d'exécution du procédé de commande selon l'invention.
La figure 3 est un diagramme d'un deuxième mode d'exécution du procédé de commande selon l'invention.

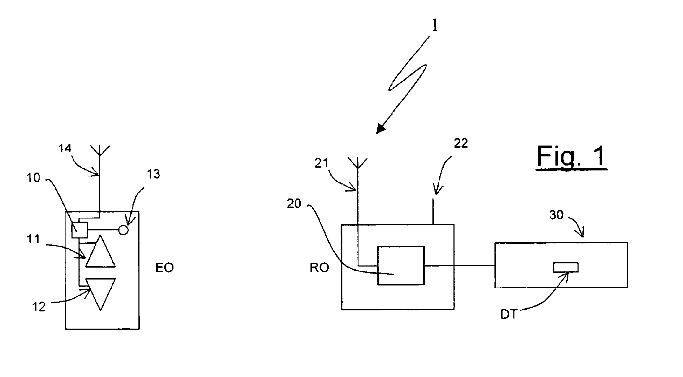

Le dispositif 1 représenté à la figure 1 comprend un émetteur d'ordres EO susceptible de communiquer par le biais d'ondes à radio avec un récepteur d'ordres RO pilotant un moteur 30 entraînant un élément de fermeture non représenté.

L'émetteur d'ordres comprend des moyens 14 d'émission et, éventuellement, de réception d'ordres radioélectriques. Il comprend un bouton 11 pour commander l'émission d'ordres de montée de l'élément et un bouton 12 pour commander l'émission d'ordres de descente de l'élément. Il comprend en outre un moyen 13 permettant d'informer l'utilisateur sur l'état de disponibilité du moteur 30. Ce moyen est par exemple constitué d'une ou deux diodes électroluminescentes, ou encore d'une diode électroluminescente bicolore. Il peut s'agir aussi d'un écran ou d'un dispositif d'émission d'ondes sonores. L'émetteur comprend encore un microprocesseur 10 relié aux boutons 11, 12, aux moyens d'émission 14 et au moyen d'information 13 de l'utilisateur.

Le récepteur d'ordres RO comprend un moyen 21 de réception d'ondes radioélectriques et, éventuellement, d'émission, relié à un microprocesseur 20. Le récepteur d'ordres est connecté au secteur 22, ou, éventuellement, à une autre source indépendante d'énergie électrique. Le récepteur d'ordres RO pilote le moteur 30 muni d'un disjoncteur thermique DT, permettant de couper l'alimentation électrique du moteur 30 lorsque celui-ci présente une température supérieure à une température déterminée.

Le récepteur d'ordres comprend des moyens de détection directe ou indirecte de l'état du disjoncteur thermique DT, par exemple identiques à ceux de l'art antérieur cité.

Le moyen d'information peut être affecté, pendant certaines phases de programmation, à d'autres fonctions que celle d'information de la disponibilité du moteur. Il peut consister par exemple en une ou plusieurs diodes électroluminescentes, en un écran ou en un dispositif d'émission d'ondes sonores.

L'émetteur d'ordres peut communiquer de manière bidirectionnelle avec un ou plusieurs récepteurs d'ordres. Les moyens de communication sont connus de l'homme du métier. Plusieurs émetteurs d'ordres et récepteurs d'ordres peuvent être organisés sous forme de réseau de communication. Comme il est connu de l'état de la technique, ceux-ci peuvent comporter des identifiants permettant l'exécution d'ordres individuels ou collectifs.

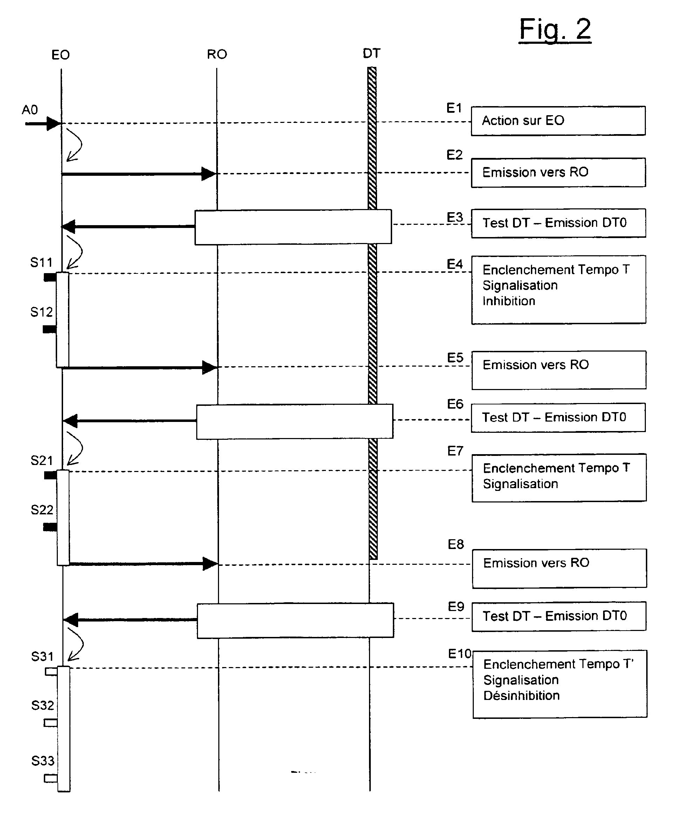

Un premier mode d'exécution du procédé de commande selon l'invention est représenté par le diagramme de la figure 2. Sur ce diagramme, le temps s'écoule verticalement de haut en bas et l'état du disjoncteur thermique DT est représenté. On suppose que du fait de manoeuvres précédentes de l'élément de fermeture, le moteur 30 a atteint un état de surchauffe et que le disjoncteur thermique est dans son état ouvert, ce qui est représenté par un trait hachuré.

A l'étape E1, l'utilisateur exerce une action A0 sur un des boutons 11 ou 12 de commande de mouvement de l'émetteur d'ordres EO. L'émetteur d'ordres EO émet alors lors de l'étape E2 un signal de commande du moteur, tel qu'un ordre de montée CMM ou un ordre de descente CMD, en direction du récepteur d'ordres.

Dès que cet ordre de commande est reçu par le récepteur d'ordres, l'état du disjoncteur thermique DT est testé et est envoyé à l'émetteur d'ordres lors d'une étape E3. Lors de ce test, le disjoncteur thermique est dans son état ouvert. On peut aussi prévoir que, à cette étape, l'état n'est envoyé vers l'émetteur d'ordres que s'il s'agit d'un état ouvert.

Dès réception de l'état ouvert du disjoncteur thermique par l'émetteur d'ordres, celui-ci déclenche lors d'une étape E4 une temporisation T par exemple fixée à 30 secondes et représentée par un rectangle vertical blanc et envoie un signal d'information S11 à l'utilisateur par activation du moyen d'information de l'utilisateur. Selon les variantes de réalisation, ce signal peut être lumineux ou sonore. Il peut être continu et durer quelques secondes. Il peut encore être constitué d'impulsions brèves, de l'ordre du dixième de seconde, répété régulièrement, par exemple toutes les cinq secondes. Le signal d'information n'est activé que pendant un intervalle de temps limité, et préférentiellement de manière discontinue, avec un faible rapport cyclique.

Pendant cette temporisation, les touches de commande de mouvement de l'émetteur d'ordres sont inhibées. En effet, le microprocesseur 10 ne traduit plus, pendant cette temporisation, les actions sur ces touches en des ordres de commande de mouvement du moteur. Dans le cas où, l'émetteur d'ordres est susceptible de communiquer avec plusieurs récepteurs d'ordres, l'émission d'ordres de commande vers d'autres récepteurs d'ordres reste bien entendu possible. De même, la communication avec le récepteur d'ordres resterait possible dans le cas où celui-ci pilote également d'autres charges que le moteur.

A la fin de la temporisation T, dans une étape E5, l'émetteur émet spontanément une nouvelle commande consistant préférentiellement en une interrogation d'état du disjoncteur thermique. Cette commande CM0 déclenche une étape E6 dans laquelle l'état du disjoncteur thermique est testé et envoyé à l'émetteur d'ordres.

Aux étapes E6 et E7, tout se passe ici comme aux étapes E3 et E4, car le test d'état du disjoncteur thermique révèle que son état est ouvert.

A l'étape E8, il y a, comme à l'étape E5, émission d'une commande d'interrogation d'état du disjoncteur thermique. Cette fois, on suppose que le moteur est suffisamment refroidi et que le disjoncteur thermique est dans son état fermé.

Lors d'une étape E9, l'état du disjoncteur thermique DT est testé et envoyé à l'émetteur d'ordres.

Lors de la réception de cet état fermé, soit l'émetteur d'ordres cesse toute signalisation, soit, préférentiellement, il active une nouvelle temporisation T', éventuellement différente de T, pendant laquelle il émet un signal d'information de l'utilisateur différent du signal émis lorsque le disjoncteur thermique est ouvert, par exemple il fait passer de rouge à vert une diode électroluminescente.

Les touches de l'émetteur d'ordres deviennent alors de nouveau fonctionnelles et permettent de nouveau l'émission d'ordres de commande.

Au total, la durée cumulée d'activation du moyen de signalisation pendant laquelle il existe une consommation d'énergie par ce moyen est préférentiellement limité à une minute.

La mise en oeuvre de ce procédé de commande permet de satisfaire le besoin d'information de l'utilisateur tout en étant particulièrement économe en énergie et tout en évitant de saturer le réseau de communication par l'émission d'ordres qui ne peuvent être exécutés.

Bien entendu, les échanges entre émetteur d'ordres et récepteur d'ordres peuvent être plus complexes. En particulier, on peut prévoir que toute commande émise par le récepteur d'ordres soit suivie d'un accusé de réception contenant un indicateur de défaut et émis vers l'émetteur d'ordres. En cas de défaut, une interrogation spécifique de l'émetteur d'ordres peut s'enquérir de la nature du défaut par une nouvelle émission. Le récepteur d'ordres indique alors le code du défaut. Ce n'est qu'en réponse à un défaut de type disjoncteur thermique ouvert qu'est enclenchée au sein de l'émetteur d'ordres la séquence de signalisation et de blocage fonctionnel de touches qui vient d'être décrite.

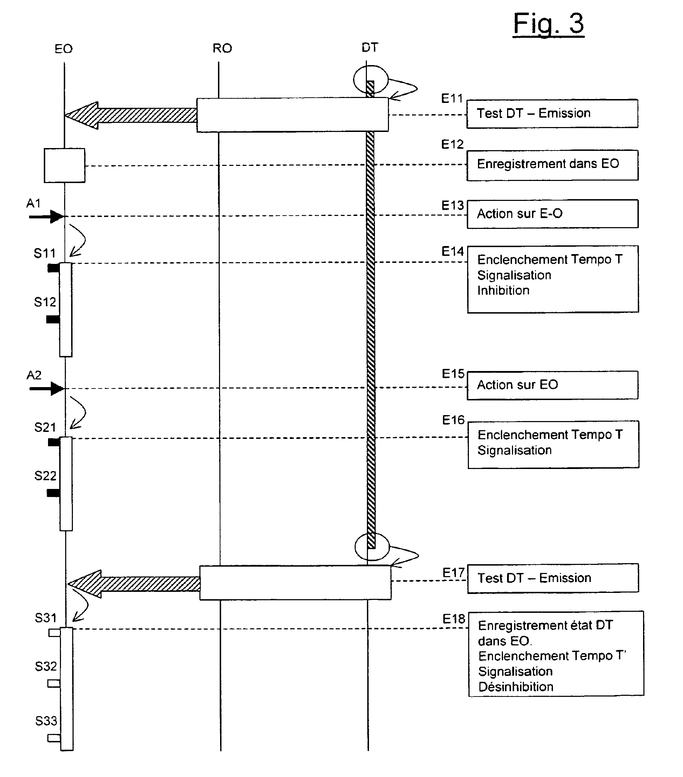

Un deuxième mode d'exécution du procédé de commande selon l'invention est représenté par le diagramme de la figure 3. Dans ce mode d'exécution, le récepteur d'ordres teste périodiquement ou continûment l'état du disjoncteur thermique DT.

A l'origine du diagramme, on suppose que, du fait de manoeuvres antérieures, le disjoncteur thermique s'ouvre. Cet événement est repéré par un rond en début de séquence. Ce changement d'état est détecté par le récepteur d'ordres à l'étape E11. Le récepteur d'ordres diffuse alors sur le réseau de communication une information indiquant l'indisponibilité du moteur.

L'émission de cette information pourrait tout aussi bien être conditionnée par la réception d'un nouvel ordre de commande.

Lors d'une étape E12, le ou les émetteurs d'ordres susceptibles de commander ce récepteur d'ordres reçoivent et enregistrent cette information par exemple dans une table contenue en mémoire. On peut aussi prévoir que seul l'émetteur d'ordres à l'origine de la dernière commande adressée au récepteur d'ordres enregistre cette information.

Cette information a pour effet d'inhiber les touches des émetteurs d'ordres l'ayant enregistrée.

Lors d'une étape E13, l'utilisateur appuie sur la touche d'un émetteur d'ordres (action A1) ayant enregistré l'information d'indisponibilité du moteur. Cette action a pour effet de passer à l'étape E14 dans laquelle l'émetteur d'ordres teste en mémoire l'état du disjoncteur thermique DT du moteur considéré et signale son indisponibilité. Comme dans le mode d'exécution précédent, le signal d'information de l'actionneur n'est activé que pendant une temporisation T et, préférentiellement, de manière discontinue, avec un faible rapport cyclique.

Bien qu'une touche de commande de l'émetteur d'ordres ait été activée aucun ordre de commande n'est émis vers le récepteur d'ordres, les touches de commande étant inhibées.

On suppose que l'utilisateur répète une action de commande A2 lors d'une étape E15, sur la même touche de commande. De nouveau, lors de l'étape E16, aucun ordre de commande n'est émis et il y a affichage de l'information d'indisponibilité du moteur considéré.

A l'étape E17, le récepteur d'ordres détecte que le disjoncteur thermique est de nouveau fermé. Il émet donc une information contenant l'état du disjoncteur thermique à destination du ou des émetteurs d'ordres susceptibles de commander le moteur.

A l'étape 18, l'émetteur d'ordres enregistre le nouvel état du disjoncteur thermique. Les touches de commande sont de nouveau désinhibées et l'émission d'ordres de commande vers le récepteur d'ordres devient de nouveau possible. Il y a préférentiellement affichage de la nouvelle information de disponibilité du moteur sur le ou les émetteurs d'ordres susceptibles de commander le moteur.

Au total, la durée cumulée d'activation du moyen de signalisation pendant laquelle il existe une consommation d'énergie par ce moyen est préférentiellement limité à une minute.

## Revendications

1. Procédé de commande d'un dispositif (1) de fermeture, d'occultation ou de protection solaire comprenant un moteur d'entraînement (30) alimenté à travers un disjoncteur thermique (DT), un récepteur d'ordres (RO) pilotant le moteur (30) et un émetteur d'ordres (EO) autonome et susceptible de communiquer à distance avec le récepteur d'ordres (RO) et comportant des moyens de commande (11, 12) d'émission d'ordres de mouvement, **caractérisé en ce que** l'émetteur d'ordres (EO) émet un premier signal sensoriel d'information pendant une durée limitée suivant l'activation d'un des moyens de commande d'émission d'ordres de mouvement, lorsque le disjoncteur thermique est dans l'état ouvert.

2. Procédé de commande selon la revendication 1, **caractérisé en ce que** l'émetteur d'ordres (EO) émet un second signal sensoriel d'information pendant une durée limitée lorsque le disjoncteur thermique est passé de l'état ouvert à l'état fermé.

3. Procédé de commande selon l'une des revendications 1 à 2, **caractérisé en ce que** la durée cumulée d'émission des signaux sensoriels d'information est inférieure à une minute.

4. Procédé de commande selon l'une des revendications 1 à 3, **caractérisé en ce que** l'émission par l'émetteur d'ordres (EO) de certains ordres de commande (CMM, CMD) est inhibée pendant que le disjoncteur thermique (DT) est dans son état ouvert.

5. Procédé de commande selon la revendication 4, **caractérisé en ce que** l'émetteur d'ordres (EO) est inhibé, respectivement désinhibé, suite à l'émission de signaux d'inhibition, respectivement de désinhibition, du récepteur d'ordres (RO) vers l'émetteur d'ordres (EO).

6. Procédé de commande selon la revendication 5, **caractérisé en ce que** l'émission des signaux d'inhibition et de désinhibition fait suite au changement d'état du disjoncteur thermique.

7. Procédé de commande selon la revendication 6, **caractérisé en ce que** l'émission des signaux d'inhibition et de désinhibition fait suite à l'émission de signaux de l'émetteur d'ordres au récepteur d'ordres.

8. Procédé de commande selon la revendication 7, **caractérisé en ce que**, lorsque le disjoncteur thermique est dans son état ouvert, l'émission d'un signal de l'émetteur d'ordres au récepteur d'ordre se fait à l'échéance d'une temporisation déclenchée par l'émission précédente.

9. Procédé de commande selon l'une des revendications 1 à 8, **caractérisé en ce que** les signaux sensoriels d'information de l'état du disjoncteur thermique (DT) sont sonores ou visuels.

10. Dispositif (1) de fermeture, d'occultation ou de protection solaire pour la mise en oeuvre du procédé selon l'une des revendications précédentes, comprenant un moteur d'entraînement (30) alimenté à travers un disjoncteur thermique (DT), un récepteur d'ordres (RO) pilotant le moteur (30) et un émetteur d'ordres (EO) autonome et susceptible de communiquer à distance avec le récepteur d'ordres (RO), **caractérisé en ce que** l'émetteur d'ordres comprend des moyens (13) d'émission temporisée de signaux sensoriels d'information sur l'état du disjoncteur thermique (DT).

11. Dispositif (1) de fermeture, d'occultation ou de protection solaire selon la revendication 10, **caractérisé en ce que** l'émetteur d'ordres (EO) comprend des moyens (10) d'inhibition de certaines commandes de l'émetteur d'ordres.

12. Dispositif (1) de fermeture, d'occultation ou de protection solaire selon la revendication 10 ou 11, **caractérisé en ce que** l'émetteur d'ordres (EO) comprend des moyens (10, 13) d'activation automatique d'une commande d'interrogation (CMO) adressée périodiquement par l'émetteur d'ordres vers le récepteur d'ordres.

## Claims

1. A method for controlling a closing, privacy or sun protection device (1) comprising a driving motor (30) powered through a thermal circuit-breaker (DT), a command receiver (RO) driving the motor (30), and a self-powered command transmitter (EO) capable of communicating remotely with the command receiver (RO) and including control means (11, 12) transmitting movement commands, **characterized in that** the command transmitter (EO) transmits a first sensory information signal for a limited duration following the activation of one of the control means transmitting movement commands, when the thermal circuit-breaker is in the open state.

2. The control method according to claim 1, **characterized in that** the command transmitter (EO) transmits a second sensory information signal for a limited duration when the thermal circuit-breaker has gone from the open state to the closed state.

3. The control method according to one of claims 1 to 2, **characterized in that** the cumulative transmission duration of the sensory information signals is less than one minute.

4. The control method according to one of claims 1 to 3, **characterized in that** the transmission of some control commands (CMM, CMD) by the command transmitter (EO) is inhibited while the thermal circuit-breaker (DT) is in its open state.

5. The control method according to claim 4, **characterized in that** the command transmitter (EO) is inhibited, disinhibited, respectively, following the transmission of inhibition, disinhibition signals, respectively, from the command receiver (RO) to the command transmitter (EO).

6. The control method according to claim 5, **characterized in that** the transmission of the inhibition and disinhibition signals follows the change in the state of the thermal circuit-breaker.

7. The control method according to claim 6, **characterized in that** the transmission of the inhibition and disinhibition signals follows the transmission of signals from the command transmitter to the command receiver.

8. The control method according to claim 7, **characterized in that**, when the thermal circuit-breaker is in its open state, the transmission of a signal from the command transmitter to the command receiver occurs upon expiration of a specified timeframe triggered by the previous transmission.

9. The control method according to one of claims 1 to 8, **characterized in that** the sensory information signals on the state of the thermal circuit-breaker (DT) are auditory or visual.

10. A closing, privacy or sun protection device (1) for implementing the method according to one of the preceding claims, comprising a driving motor (30) powered through a thermal circuit-breaker (DT), an command receiver (RO) driving the motor (30), and a self-powered command transmitter (EO) capable of communicating remotely with the command receiver (RO), **characterized in that** the command transmitter comprises means (13) for the timed transmission of sensory information signals on the state of the thermal circuit-breaker (DT).

11. The closing, privacy or sun protection device (1) according to claim 10, **characterized in that** the command transmitter (EO) comprises means (10) for inhibiting some controls from the command transmitter.

12. The closing, privacy or sun protection device (1) according to claim 10 or 11, **characterized in that** the command transmitter (EO) comprises means (10, 13) for automatically activating a query command (CM0) periodically sent by the command transmitter to the command receiver.

## Patentansprüche

1. Steuerungsverfahren einer Schließ-, Verdunkelungs- oder Sonnenschutzvorrichtung (1), die einen Antriebsmotor (30), der durch einen thermischen Schutzschalter (DT) versorgt wird, einen Befehlsempfänger (RO), der den Motor (30) steuert und einen Befehlssender (EO), der autonom und imstande ist, aus der Entfernung mit dem Befehlsempfänger (RO) zu kommunizieren (RO) und Steuermittel (11, 12) für das Senden von Bewegungsbefehlen aufweist, umfasst, **dadurch gekennzeichnet, dass** der Befehlssender (EO) während einer begrenzten Dauer nach der Aktivierung eines der Steuermittel für das Senden von Bewegungsbefehlen ein erstes sensorisches Informationssignal sendet, wenn der thermische Schutzschalter im geöffneten Zustand ist.

2. Steuerungsverfahren nach Anspruch 1, **dadurch gekennzeichnet, dass** der Befehlssender (EO) während einer begrenzten Dauer ein zweites sensorisches Informationssignal sendet, wenn der thermische Schutzschalter vom geöffneten in den geschlossenen Zustand gewechselt hat.

3. Steuerungsverfahren nach einem der Ansprüche 1 bis 2, **dadurch gekennzeichnet, dass** die kumulierte Dauer der Sendung von sensorischen Informationssignalen kürzer als eine Minute ist.

4. Steuerungsverfahren nach einem der Ansprüche 1 bis 3, **dadurch gekennzeichnet, dass** die Sendung von bestimmten Steuerbefehlen (CMM, CMD) durch den Befehlssender (EO) gehemmt ist, solange der thermische Schutzschalter (DT) in seinem geöffneten Zustand ist.

5. Steuerungsverfahren nach Anspruch 4, **dadurch gekennzeichnet, dass** der Befehlssender (EO) nach der Sendung von Hemmungs- beziehungsweise Enthemmungssignalen des Befehlsempfängers (RO) an den Befehlssender (EO) gehemmt beziehungsweise enthemmt ist.

6. Steuerungsverfahren nach Anspruch 5, **dadurch gekennzeichnet, dass** die Sendung von Hemmungs- und Enthemmungssignalen nach dem Zustandwechsel des thermischen Schutzschalters erfolgt.

7. Steuerungsverfahren nach Anspruch 6, **dadurch gekennzeichnet, dass** die Sendung der Hemmungs- und Enthemmungssignale nach der Sendung von Signalen des Befehlssenders an den Befehlsempfänger erfolgt.

8. Steuerungsverfahren nach Anspruch 7, **dadurch gekennzeichnet, dass**, wenn der thermische Schutzschalter in seinem geöffneten Zustand ist, die Sendung eines Signals des Befehlssenders an den Befehlsempfänger nach Ablauf einer Verzögerung erfolgt, die durch die vorangehende Sendung ausgelöst wurde.

9. Steuerungsverfahren nach einem der Ansprüche 1 bis 8, **dadurch gekennzeichnet, dass** die sensorischen Informationssignale des Zustands des thermischen Schutzschalters (DT) akustisch oder visuell sind.

10. Schließ-, Verdunkelungs- oder Sonnenschutzvorrichtung (1) für die Umsetzung des Verfahrens nach einem der vorangehenden Ansprüche, die einen Antriebsmotor (30), der durch einen thermischen Schutzschalter (DT) versorgt wird, einen Befehlsempfänger (RO), der den Motor (30) steuert und einen autonomen Befehlssender (EO), der imstande ist, aus der Entfernung mit dem Befehlsempfänger (RO) zu kommunizieren (RO), umfasst, **dadurch gekennzeichnet, dass** der Befehlssender Mittel (13) zum verzögerten Senden von sensorischen Informationssignalen über den Zustand des thermischen Schutzschalters (DT) umfasst.

11. Schließ-, Verdunkelungs- oder Sonnenschutzvorrichtung (1) nach Anspruch 10, **dadurch gekennzeichnet, dass** der Befehlssender (EO) Hemmungsmittel (10) bestimmter Befehle des Befehlssenders umfasst.

12. Schließ-, Verdunkelungs- oder Sonnenschutzvorrichtung (1) nach Anspruch 10 oder 11, **dadurch gekennzeichnet, dass** der Befehlssender (EO) automatische Aktivierungsmittel (10, 13) eines Abfragebefehls (CM0) umfasst, der periodisch vom Befehlssender an den Befehlsempfänger gesendet wird.
